# EUROPEAN PATENT APPLICATION

(11) **EP 4 310 966 A1**
(43) Date of publication of application: **24.01.2024**
(21) Application number: 22382691.8
(22) Date of filing: 19.07.2022
(51) Int. Cl.: H01M 8/1246, H01M 8/1253, H01M 8/126, H01M 8/1213

(54) **A LAYERED STRUCTURE COMPRISING A COMPOSITE THIN LAYER DEPOSITED OVER A BASE ELECTROLYTE LAYER IN AN ELECTROCHEMICAL DEVICE, A PROCESS FOR MANUFACTURING AND USES THEREOF**

(71) Applicant: FUNDACIÓ INSTITUT DE RECERCA EN ENERGIA DE CATALUNYA, 08930 Barcelona (ES); Institució Catalana de Recerca I Estudis Avançats, 08010 Barcelona (ES); Cambridge Enterprise Limited ("CE"), Cambridge CB2 1TN (GB)
(72) Inventor: TARANCÓN RUBIO, Albert, Barelona (ES); BAIUTTI, Federico, Barcelona (ES); TORRELL FARO, Marc, Bacelona (ES); BERNADET, Lucile, Badalona (ES); ALAYO BUENO, Nerea, Bilbao (ES); DRISCOLL, Judith, Cambridge (GB); WELLS, Matt, Cambridge (GB)
(74) Representative: Ponti & Partners, S.L.P

(57) **Abstract**

The present invention relates to a layered structure comprising a composite thin layer deposited over a base electrolyte layer in an electrochemical device. The present invention further relates to a process for manufacturing said layered structure and uses thereof.

## Description

### Field of the invention

The present invention relates to electrochemical devices. In particular, the present invention relates to a layered structure comprising a composite thin layer deposited over a base electrolyte layer in an electrochemical device, a process for manufacturing said layered structure and uses thereof

### Background

Typical electrodes are made by different layers, one for each purpose: one barrier layer to prevent cationic diffusion and one functional layer for transporting current.

For example, US 20160156057 discloses oxygen ion conductive electrolyte membranes for use in applications such as solid oxide fuel cells. Exemplary embodiments include an electrolyte membrane comprising a composite structure of first and second oxide ceramic materials, an oxygen ion conductive interface between the first and second materials extending from first to second opposing surfaces through a thickness of the membrane.

US2006/0234855 discloses a method for preparing an electrode for a solid oxide fuel cell, in which a conductive material, such as a metal, is electrodeposited onto a porous electrode comprising a conductive material and an electrolyte.

KR10-2264661 B1 discloses a solid oxide electrolyte including a thin film electrolyte layer having a multi-repeating structure.

In view of the above prior art, there is the need to develop one single layer capable of having both functionalities (barrier and functional layer) which indeed would make its manufacturing process simpler and the performance thereof would be improved. In this sense, the structure developed by the present inventors have the following technical advantages:
- the formation of local oxygen high pressure areas are prevented;
- the in-plane electronic conductivity for current collection is maximized;
- the lack of a well-defined current pathway leading to degradation due to high current density areas is overcome.

Accordingly, the present inventors have developed a layered structure comprising a composite thin layer deposited over a base electrolyte layer, wherein said composite thin layer consists of an oxygen conducting electrolyte and an electronic conducting electrode material deposited by a vapour deposition process, which composite thin layer has a double functionality, as a barrier and as a functional layer in SOC (solid oxide cell) devices.

### Summary of the invention

In a first aspect, the present invention relates to a layered structure comprising a composite thin layer deposited over a base electrolyte layer in an electrochemical device.

In a second aspect, the present invention relates to a process for manufacturing the layered structure according the first aspect of the invention.

In a third aspect, the present invention relates to an electrochemical device comprising the layered structure according the first aspect of the invention.

In a fourth aspect, the present invention relates to different uses of the layered structure according the first aspect of the invention.

### Brief description of the drawings

Figure 1. SEM cross section of layered structure.
Figure 2. In-plane DC conductivity of the layered structure.
Figure 3. Electrochemical impedance Nyquist plot indicating the area-specific resistance of the layered structure at 750 °C in air atmosphere.
Figure 4. Current-voltage and current-power curves for a full cell with multilayered structured.
Figure 5. Sketch of full solid oxide cell comprising of the layered structure.

### Detailed description

In a first aspect, the present invention relates to a layered structure comprising a composite thin layer deposited over a base electrolyte layer in an electrochemical device, consisting said composite thin layer of:
- an ionic conductor; and
- an electronic conductor,
wherein said composite thin layer has a thickness between 10 nm and 10 µm, and wherein the total conductivity of said layer is of at least 1 S/cm as measured in an in-plane configuration and wherein the area-specific resistance is lower than 100 ohm·cm⁻².

In-plane conductivity measures the resistance of the layer against current flow parallel to the inert substrate and is therefore an indication of how efficient is current collection from the device. It is typically measured by DC (Direct Current) methods by measuring the voltage loss upon current flow between 2 or 4 electrodes, or by AC (Alternating Current) methods by applying a small voltage or current perturbation and by measuring the resulting impedance. The area-specific resistance is instead associated to electrochemical processes of oxygen exchange and diffusion. It is typically measured by impedance spectroscopy in an out of plane configuration, by applying an oscillating voltage between a working electrode and a counter electrode separated by an electrolyte, in order to induce the movement of ions in the electrodes and the exchange of oxygen between the solid electrode and the gas. Both values are obtained in the operation conditions (temperature and atmosphere composition) of the device. The maximization of the in-plane conductivity and minimization of the area-specific resistance are directly linked to low device power losses.

In a preferred embodiment of the first aspect, the ionic conductor is selected from M-doped zirconia, M-doped ceria, M-doped barium zirconate, M-doped barium cerate, where M is a metal in the 3+ or 2+ oxidation state, wherein M is preferably selected from La, Sm, Sc, Ca, Y and Gd.

In a preferred embodiment of the first aspect, the electronic conductor is selected from M-doped lanthanum manganite, ferrite, titanite and cobaltite, wherein M is preferably Sr, Ba or Ca.

In a preferred embodiment of the first aspect, the electrolyte is selected from M-doped zirconia, M-doped ceria, M-doped barium zirconate, M-doped barium cerate, where M is a metal in the 3+ or 2+ oxidation state.

In another preferred embodiment, the layered structure according to any of the embodiments for the first aspect, further comprises an intermediate electrolyte layer between the base electrolyte layer and the composite thin layer having a thickness between 10 nm and 10 µm and made of M-doped zirconia, M-doped ceria, M-doped barium zirconate, M-doped barium cerate, where M is a metal in the 3+ or 2+ oxidation state

In a second aspect, the present invention relates to a process for preparing a composite thin layer deposited on top of an electrolyte according to any of embodiments or a combination thereof of the first aspect of the invention, comprising the steps of:
a) heating an electrolyte as a support at a temperature between 500 °C and 950 °C;
b) depositing via a laser ablation/evaporation the composite thin layer over the heated support obtained in step a).

In the case the layered structure according to any of the embodiments for the first aspect, further comprises an intermediate electrolyte layer between the base electrolyte layer and the composite thin layer, the process according to the second aspect will comprise of the steps of:
a1) heating an electrolyte as a support at a temperature between 500 °C and 950 °C;
b1) depositing via a laser ablation/evaporation the intermediate electrolyte layer over the heated support obtained in step a); and
c1) depositing via a laser ablation/evaporation the composite thin layer over the intermediate electrolyte layer deposited in step b1).
In a preferred embodiment of the second aspect, the process further comprises an annealing step over the composite thin layer deposited on top of an electrolyte or over the intermediate electrolyte layer to be carried out after step b) or c1), respectively, at a temperature higher than 800 °C.

In a preferred embodiment of the second aspect, the electrolyte employed in step a) is selected from M-doped zirconia, M-doped ceria, M-doped barium zirconate, M-doped barium cerate, where M is a metal in the 3+ or 2+ oxidation state.

In a preferred embodiment of the second aspect, the ionic conductor employed in the composite thin layer of step b) is selected from M-doped zirconia, M-doped ceria, M-doped barium zirconate, M-doped barium cerate, where M is a metal in the 3+ or 2+ oxidation state, preferably wherein M is selected from La, Sm, Sc, Ca, Y and Gd.

In a preferred embodiment of the second aspect, the electronic conductor employed in the composite thin layer of step b) is selected from M²⁺-doped lanthanum manganite, ferrite and cobaltite, preferably wherein M is Sr, Ba or Ca.

In a third aspect, the present invention related to an electrochemical device comprising the layered structure according to any of the embodiments or a combination thereof of the first aspect of the invention. In a preferred embodiment, said electrochemical device is a solid oxide fuel or electrolysis cell.

In a fourth aspect, the present invention relates to the use of the composite thin layer from the layered structure according to any of the embodiments or a combination thereof of the first aspect of the invention, for **simultaneously:** - protecting and isolating the cation diffusivity and reaction of the electrode material with the electrolyte (barrier layer) at high temperature;
- for enhancing the catalytic activity for the oxygen reduction reaction or oxygen evolution reaction;
- collecting current.

In another embodiment, the present invention relates to the use of the composite thin layer from the layered structure according to any of the embodiments or a combination thereof of the first aspect of the invention, for increasing the efficiency and durability of the electrochemical device. The invention determines a decrease in the current collection and increase of the electrochemical activity at the oxygen electrode, which are typically responsible for the main losses in solid oxide cell. Efficient ionic and electronic current distribution allow for increasing the durability of the device as the formation of high current and high oxygen pressure areas are prevented. Moreover, the full density of the layer obtained by laser ablation/evaporation surprisingly efficiently blocks the migration of the ions between electrode and electrolyte.

The invention will be now illustrated by way of one or more examples which do not intend to limit the scope of the invention.

### EXAMPLE

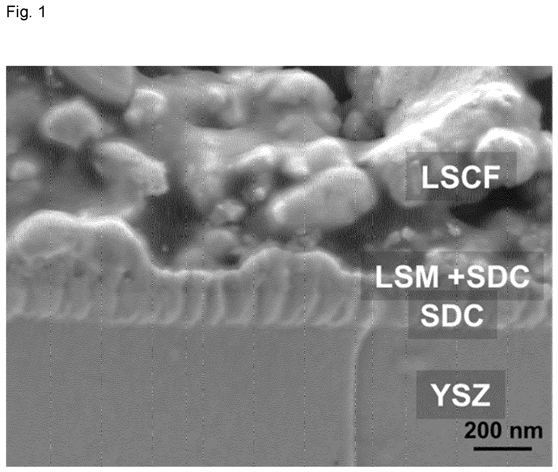

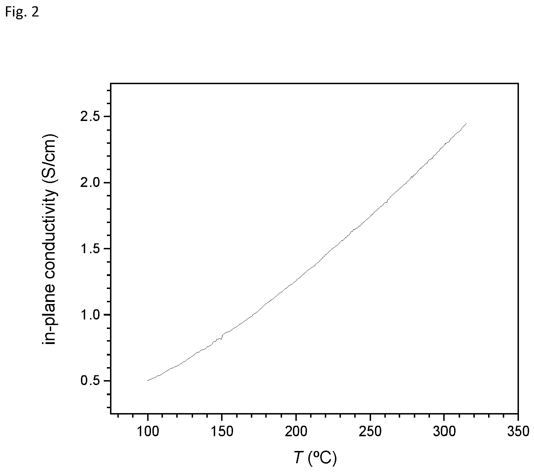

A layered structure is composed by the sequential deposition of an electrolyte layer thin film with composition Ce_{0.8}Sm_{0.2}O₂ (SDC in Figure 1), thickness ≈200 nm, and of a composite thin layer of composition Ce_{0.8}Sm_{0.2}O₂+(La_{0.8}Sr_{0.2})MnO₃, 50:50 ratio, thickness ≈200 nm (LSM+SDC in Figure 1). Both layers are fabricated using pulsed laser deposition, by ablating ceramic pellets of the same stoichiometry as the deposited films, using a KrF excimer laser with energy fluency of around 1 J·cm⁻², substrate temperature 750 °C, target-substrate distance of 90 mm and chamber oxygen partial pressure of 0.7 Pa. The substrate is a commercial 8 mol% Y₂O₃-doped ZrO₂ polycrystalline tape. On top of the layered structure, a cathode layer of (La_{0.6}Sr_{0.4})_{0.97}CO_{0.2}Fe_{0.8}O₃ (LSCF) was deposited by a 3-axis automated airbrush using an ethanol-based dispersion ink. The full structure was heat treated for co-sintering at 1000 °C. Sketch of the full cell is represented in Figure 2.

In Figure 2, the in-plane conductivity of the layered structure is reported. The measurement was carried out by DC method and Van Der Pauw configuration. The measured conductivity is between 0.5 S/cm and 2.5 S/cm in the temperature range 100-320 °C and it increases with temperature.

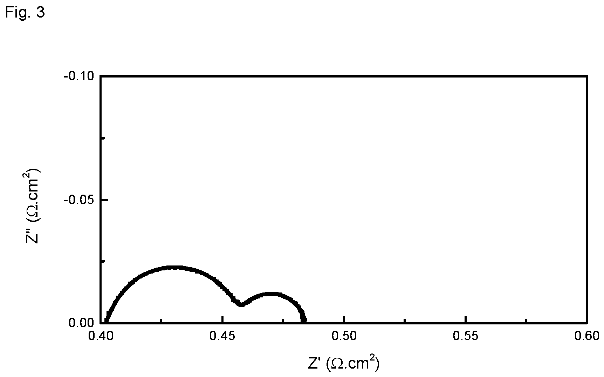

In figure 3, the area-specific resistance of the layered structure+LSCF cathode (fabricated as in the methods) is reported. The real and imaginary part of the impedance are shown in axis X and Y, respectively. The measurement was carried out by AC impedance spectroscopy, measuring the sample impedance across the cell and using voltage oscillations of 50 mV with varying frequency, from 1 MHz to 100 mHz. The intercept of the plot with the X-axis (Z'=0.48 ohm*cm², Z"=0 ohm*cm²) indicates the value of the area-specific resistance. Measurement conditions were T=750 °C, synthetic air atmosphere.

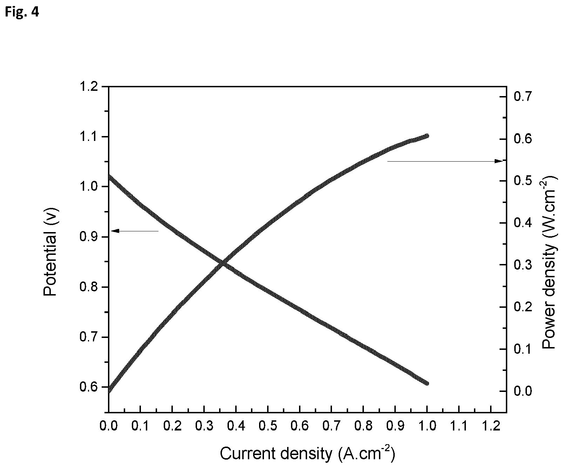

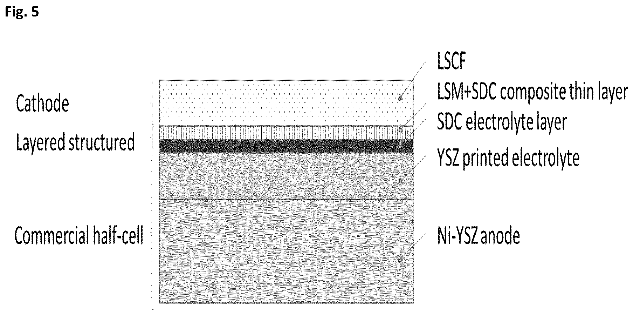

In Figure 4, the performance of a full cell comprising of the layered structure (as in the sketch in Figure 5) is reported. The measurement was carried out under dry H2 fuel in the anodic compartment and synthetic air and oxygen in the cathode with a flow density of 22.22 Nml·min⁻¹·cm⁻². The curves are obtained by imposing the flow of DC current across the device (current sweep from 0 A*cm⁻² to 1 A*cm⁻²) and measuring the potential drop. The device power density is then obtained as the product of potential and current. The obtained potential values are:
- current=0→potential 1.02 V
- current=1 A*cm-2-7potential 0.61 V, power density 0.61 W*cm⁻².

## Claims

1. A layered structure comprising a composite thin layer deposited over a base electrolyte layer in an electrochemical device, consisting said composite thin layer of:
- an ionic conductor; and
- an electronic conductor,
wherein said composite thin layer has a thickness between 10 nm and 10 µm, and wherein the total conductivity of said layer is of at least 1 S/cm as measured in an in-plane configuration and wherein the area-specific resistance is lower than 100 ohm·cm⁻².

2. The layered structure according to claim 1, wherein the ionic conductor is selected from M-doped zirconia, M-doped ceria, M-doped barium zirconate, M-doped barium cerate, where M is a metal in the 3+ or 2+ oxidation state.

3. The the layeredstructure according to claim 2, wherein M is selected from La, Sm, Sc, Ca, Y and Gd.

4. The layered structure according to any of claims 1 to 3, wherein the electronic conductor is selected from M-doped lanthanum manganite, ferrite, titanite and cobaltite, preferably wherein M is Sr, Ba or Ca.

5. The layered structure according to any of claims 1 to 4, wherein the electrolyte is selected from M-doped zirconia, M-doped ceria, M-doped barium zirconate, M-doped barium cerate, where M is a metal in the 3+ or 2+ oxidation state.

6. The layered structure according to any of claims 1 to 5 further comprising an intermediate electrolyte layer between the base electrolyte layer and the composite thin layer having a thickness between 10 nm and 10 µm and made of M-doped zirconia, M-doped ceria, M-doped barium zirconate, M-doped barium cerate, where M is a metal in the 3+ or 2+ oxidation state

7. A process for preparing a composite thin layer deposited on top of an electrolyte according to any of claims 1 to 5, comprising the steps of:
a) heating an electrolyte as a support at a temperature between 500 °C and 950 °C;
b) depositing via a laser ablation/evaporation the composite thin layer over the heated support obtained in step a).

8. The process for preparing a composite thin layer deposited on top of an electrolyte further comprising an intermediate electrolyte layer between the base electrolyte layer and the composite thin layer, according to claim 6, comprising the steps of:
a1) heating an electrolyte as a support at a temperature between 500 °C and 950 °C;
b1) depositing via a laser ablation/evaporation the intermediate electrolyte layer over the heated support obtained in step a); and
c1) depositing via a laser ablation/evaporation the composite thin layer over the intermediate electrolyte layer deposited in step b1).

9. The process according to claim 7 or 8, wherein an annealing step over the composite thin layer deposited on top of an electrolyte or over the intermediate electrolyte layer is carried out after step b) or c1), respectively, at a temperature higher than 800 °C.

10. The process according to any of claims 7 to 9, wherein the ionic conductor is selected from M-doped zirconia, M-doped ceria, M-doped barium zirconate, M-doped barium cerate, where M is a metal in the 3+ or 2+ oxidation state, wherein M is preferably selected from La, Sm, Sc, Ca, Y and Gd.

11. The process according to any of claims 7 to 10, wherein the electronic conductor is selected from M²⁺-doped lanthanum manganite, ferrite and cobaltite, preferably wherein M is Sr, Ba or Ca.

12. The process according to any of claims 7 to 11, wherein the electrolyte is selected from M-doped zirconia, M-doped ceria, M-doped barium zirconate, M-doped barium cerate, where M is a metal in the 3+ or 2+ oxidation state.

13. An electrochemical device comprising the layered structure according to any of claims 1 to 6

14. The electrochemical device according to claim 13, which is a solid oxide fuel or electrolysis cell.

15. Use of the composite thin layer from the layered structure according to any of claims 1 to 6, for **simultaneously:** - protecting and isolating the cation diffusivity and reaction of the electrode material with the electrolyte (barrier layer) at high temperature;
- for enhancing the catalytic activity for the oxygen reduction reaction or oxygen evolution reaction;
- collecting current.
